# EUROPÄISCHE PATENTSCHRIFT

(11) **EP 2 495 828 B1**
(45) Veröffentlichungstag und Bekanntmachung des Hinweises auf die Patenterteilung: **08.02.2017**
(21) Anmeldenummer: 12001253.9
(22) Anmeldetag: 25.02.2012
(51) Int. Cl.: H01R 13/74, F16B 5/06, H01R 13/631

(54) **Lagerung eines Steckers an einem Gehäuse**
Bearing for a connector on a casing
Installation d'une prise sur un boîtier

(30) Priorität: 04.03.2011 DE 102011012997
(43) Veröffentlichungstag der Anmeldung: 05.09.2012
(73) Patentinhaber: Airbus DS Electronics and Border Security GmbH, 82024 Taufkirchen (DE)
(72) Erfinder: Wech, Herbert, 89079 Ulm (DE); Grunewald, Jörg, 89231 Neu-Ulm (DE)
(74) Vertreter: Meel, Thomas

(56) Entgegenhaltungen:
- EP-A1- 0 648 944
- US-A- 5 241 451
- US-A- 5 616 052
- US-A1- 2008 145 186
- US-B1- 7 607 930

## Beschreibung

Die Erfindung betrifft eine gehäuseseitige Lagerung eines Steckers, welcher zur Kupplung mit einem Gegenstecker ausgebildet ist.

Beim Zusammenstecken eines elektrischen, mehrpoligen Steckers mit dem entsprechenden Gegenstecker zu einer Steckverbindung werden typischerweise Führungsbolzen mit Druckfederelementen verwendet, um eine sichere elektrische Verbindung zuverlässig und schnell herzustellen. Probleme ergeben sich jedoch, wenn an der Steckerwand eines Gehäuses, welches elektronische Baugruppen aufnimmt, eine Vielzahl von Steckverbindungen vorhanden sind, z.B. bei der modularen Anordnung von elektronischen Baugruppen, wie sie typisch sind für eine elektronisch geschwenkte Radarantenne mit einer großen Zahl von einzelnen Sende- und Empfangsmodulen.

Das dabei auftretende Problem besteht insbesondere darin, dass sich die Steckkräfte der einzelnen Steckverbindungen beim Zusammenstecken addieren und von dem Gehäuse bzw. einer Steckerwand an dem Gehäuse aufgenommen werden müssen. In dem oben genannten Beispiel einer Radarantenne von ca. 300 Blindsteckverbindungen auf einer Fläche von ca. 2m² ergeben sich auf diese Weise Druckkräfte von 35.000 N an der Steckerwand.

Aus der US 2008/0145186 A1 ist ein zweiteiliges Befestigungsmittel zur Befestigung einer Elektronikkarte auf einer elektronischen Leiterplatte beschrieben. Sie umfasst ein an einem Ende geschlitztes und dort mit einem Wulst versehenes Basisteil, sowie ein Gegenstück, das in das geschlitzte Ende des Basisteils eingesteckt wird.

Die US 7,607,930 B1 beschreibt die starre Befestigung eines Steckers an einem Gehäuseteil. Die starre Befestigung des Steckers an dem Gehäuseteil erfolgt durch Bolzen, die durch sich fluchtende Öffnungen an Gehäuseteil und Stecker hindurch gesteckt werden. Der Bereich an einem geschlitzten Ende des Bolzens ist konisch ausgeführt. Der Bolzen ist durch einen Ring gesichert, der in einer Nut im Bolzenschaft sitzt.

Der Erfindung liegt die Aufgabe zugrunde, eine gehäuseseitige Lagerung eines Steckers zu schaffen, mit der auch bei einer hohen Zahl von Steckverbindungen eine erhöhte Druckbelastung des Gehäuses aufgrund der Steckkräfte vermieden werden kann.

Diese Aufgabe wird mit der Lagerung nach Anspruch 1 gelöst. Vorteilhafte Ausführungen sind Gegenstand von Unteransprüchen.

Durch die erfindungsgemäße Lagerung werden keine Kräfte in die Gehäusestruktur impliziert. Während des Steckvorgangs gleitet der Stecker (an steckerseitigen Bohrungen) auf dem konischen Bereich eines radial wirkenden Federelements, wodurch die für den Kupplungsvorgang notwendige Gegenkraft zur Steckkraft erzeugt wird. Nach dem die Kupplung vollständig erfolgt ist, erreicht der Stecker einen zylindrischen Bereich des Federelements, wodurch die Axialkraft wieder aufgehoben wird.

Da die Gehäusestruktur nicht mir Kräften beaufschlagt ist, können mit der Erfindung wesentlich Gewichts- und somit Kostenreduzierungen erzielt werden.

Mit der Erfindung wird eine sichere und einfach zu handhabende Steckverbindung realisiert.

Um mechanische Toleranzen auszugleichen, kann das Federelement an dem Gehäuse schwimmend befestigt werden, so dass sowohl horizontal als auch vertikal eine Bewegungsfreiheit (im Rahmen der vorgegebenen Toleranzen) besteht.

Die Erfindung wird anhand eines konkreten Ausführungsbeispiels unter Bezugnahme auf Zeichnungen erläutert. Es zeigen:
- Fig. 1: den grundsätzlichen Aufbau der erfindungsgemäßen Lagerung in 3D-Ansicht (vor Beginn des Steckvorgangs);
- Fig. 2: ein erfindungsgemäßes Federelement in 3D-Ansicht;
- Fig. 3: eine Schnittdarstellung der erfindungsgemäßen Lagerung mit einer Steckerposition entsprechend der in Fig. 1;
- Fig. 4: eine Schnittdarstellung der erfindungsgemäßen Lagerung während des Steckvorgangs;
- Fig. 5: eine 3D-Darstellung der erfindungsgemäßen Lagerung nach Abschluss des Steckvorgangs;
- Fig. 6: eine Draufsicht auf die Situation gemäß Fig. 5.

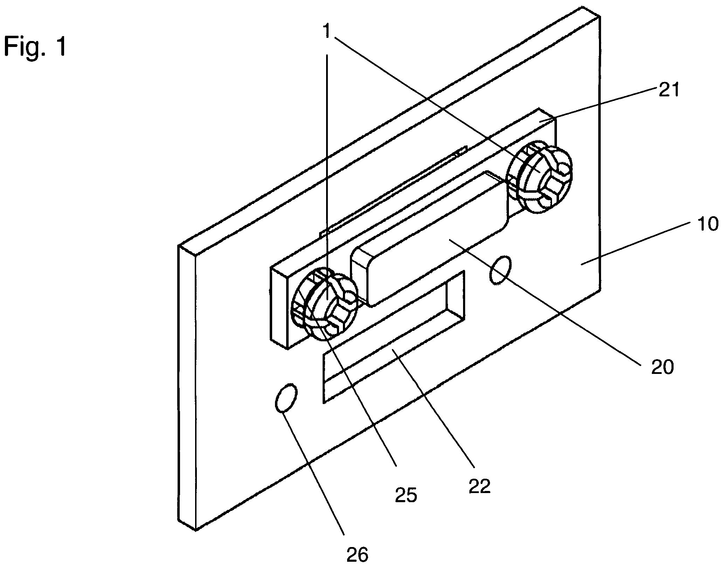

Fig. 1 zeigt den grundsätzlichen Aufbau der erfindungsgemäßen Lagerung. Mit Bezugsziffer 10 ist ein Ausschnitt aus der Steckerwand eines Gehäuses bezeichnet, an der modular eine größere Anzahl von Steckern 20 gelagert ist (von denen hier nur ein einzelner exemplarisch dargestellt ist). An der Steckerwand 10 ist der Stecker 20 mit zugehörigem Steckerflansch 21 vorhanden, die an jeweils einer Bohrung 25 am Flansch 21 auf zwei Federelemente 1 aufgesteckt sind. Die Zuführung des Steckergegenstücks erfolgt von der dem Betrachter abgewandten Seite der Gehäusewand 10 durch einen Durchbruch in der Gehäusewand (der entsprechende Durchbruch für den dem Stecker 20 benachbarten Stecker ist mit der Bezugsziffer 22 bezeichnet). Man sieht also in Fig. 1 auf die Rückseite des Steckers. Die daran angeschlossenen Leitungen sind in dieser Prinzipdarstellung nicht eingezeichnet. Bei dem Stecker kann es sich insbesondere um einen mehrpoligen Stecker (z.B. mehr als 50 Kontakte) handeln, wobei die einzelnen Anschlüsse sowohl zur Strom/Spannungsversorgung als auch zur Leitung von Signalen vorgesehen sein können.

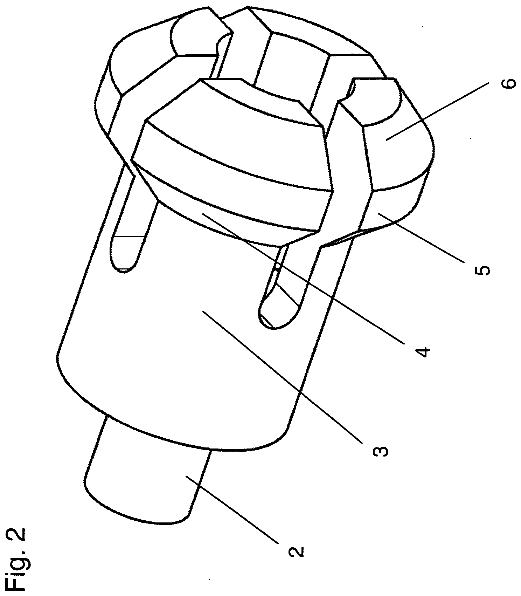

Ein Federelement 1 ist in Fig. 2 in seiner Gleichgewichtslage ohne äußere Kräfte dargestellt. Seine Federwirkung besteht in radialer Richtung. Zur Erzielung der Federwirkung ist es von einem Ende her kreuzweise geschlitzt, so dass an dem geschlitzten Ende durch radialen Druck gegen die Federkraft eine Verringerung seines Durchmessers ermöglicht wird. Die Federkonstante des Federelements 1 hängt neben dem verwendeten Material von der Tiefe der Schlitze ab. Material des Federelements 1 sowie Tiefe und Breite der Schlitze werden abhängig von den notwendigen Steckkräften beim Einsteckvorgang der Stecker gewählt. Als Material für das Federelement wird insbesondere ein metallisches Material gewählt, z.B. eine aushärtbare Kupfer-Berylliumlegierung (CuBe) oder aushärtbare Federstähle. Bei niedrigen Steckkräften kann auch ein technischer Kunststoff eingesetzt werden.

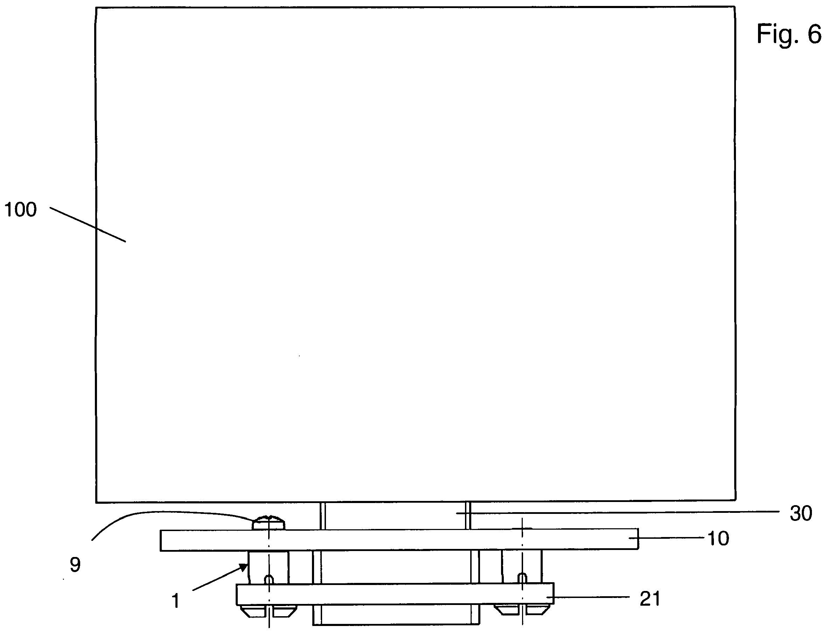

Das Federelement 1 weist in Axialrichtung fünf verschiedene Bereiche auf:
- Einen ersten zylindrischen Bereich 2. Dieser Bereich dient zur Befestigung an der Gehäusewand 10 und wird zu diesem Zweck in eine gehäuseseitige Bohrung (Bezugsziffer 26 bezeichnet die entsprechende Bohrung für den dem Stecker 20 benachbarten Stecker) eingesteckt. Zum Ausgleich von Bautoleranzen kann die Lagerung des Federelements 1 in dieser Bohrung schwimmend erfolgen. Die entsprechenden Abmessungen von Bohrung und Bereich 2 am Federelement 1 werden dazu so gewählt, dass noch ausreichend Spiel vorhanden ist, und zwar bevorzugt sowohl in horizontaler wie auch in vertikaler Richtung. Eine Beweglichkeit des Steckers 20 in die dritte Raumrichtung (Steckrichtung) wird durch den benachbarten, zweiten, zylindrischen Abschnitt 3 des Federelements 1 erreicht, auf dem der Steckerflansch 21 bis zum Erreichen des konischen Abschnitts 4 des Federelements 1 frei gleiten kann. Die Befestigung des Federelements an der Bauteilwand erfolgt durch eine Schraube 9 (Fig. 6) an der rückwärtigen Stirnseite (dem Betrachter in Fig. 2 abgewandt) des Federelements 1.
- Einen zweiten zylindrischen Bereich 3, in dieser Ausführung mit größerem Durchmesser als dem des ersten zylindrischen Bereichs 2, wobei Letzteres jedoch nicht zwingend ist. Auf diesem Bereich 3 des Federelements 1 stützt sich der Steckerflansch 21 vor dem Steckvorgang ab. Durchmesser von zweitem zylindrischen Bereich 3 und der entsprechenden Bohrung 25 im Steckerflansch werden bevorzugt so aufeinander abgestimmt, dass sich ein gewünschtes Spiel im Hinblick auf Bauteiltoleranzen ergibt.
- Einen ersten konischen Bereich 4, der einen Übergang zwischen dem zweiten zylindrischen Bereich 3 und dem sich daran anschießenden dritten zylindrischen Bereich 5 mit vergrößertem Durchmesser vermittelt. Er bildet eine - von der Gehäusewand 10 aus gesehen - ansteigende schiefe Ebene.
- Einen dritten zylindrischen Bereich 5. Dessen Durchmesser ist größer als der Durchmesser der Bohrung 25 am Flansch 21 des Steckers 20.
- Einen zweiten konischen Bereich 6 (Phase) am gehäusefernen Ende des Federelements 1. Die Steigung dieses zweiten konischen Bereichs 6 weist bezüglich der Steigung des ersten konischen Bereichs 4 ein entgegen gesetztes Vorzeichen auf. Die Beträge der beiden Steigungen werden unabhängig voneinander festgelegt, da die beiden konischen Bereiche 4 und 6 verschiedenen Zwecken dienen. Der zweite konusförmige Bereich 6 dient dazu, ein Aufstecken des Steckerflansches 21 auf das (bereits an der Gehäusewand 10 befestigte) Federelement 1 zu ermöglichen.

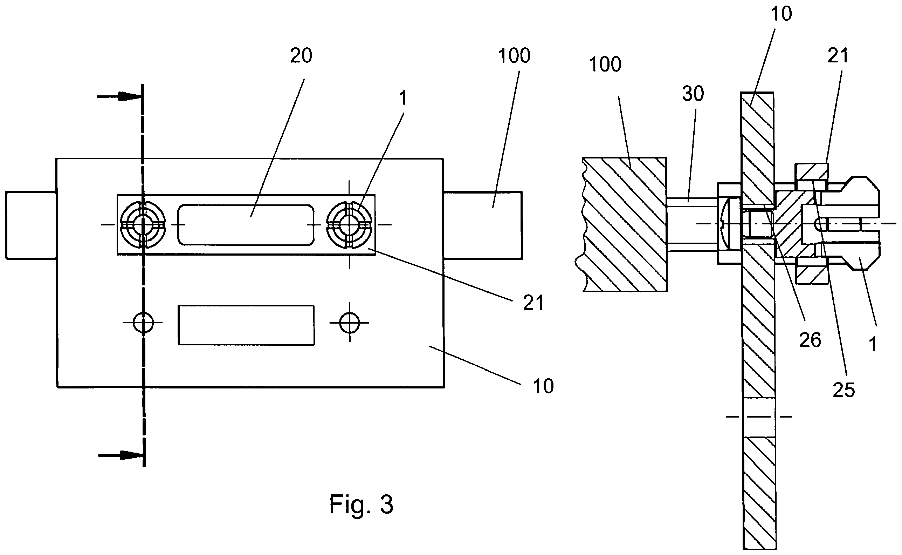

Die Querschnittdarstellung der Fig. 3 (rechte Abbildung; die linke Abbildung der Fig. 3 zeigt eine Seitenansicht der Lagerung im verkleinerten Maßstab und dient vor allem zur Orientierung über die Lage der Schnittebene) zeigt die gleiche Situation wie die von Fig. 1. Der Einsteckvorgang des Gegensteckers 30, welcher an einem Sende- oder Empfangsmodul 100 einer Antenne angeordnet ist, hat noch nicht begonnen. Der Steckerflansch 21 stützt sich noch an dem zweiten zylindrischen Bereich 3 eines Federelements 1 ab.

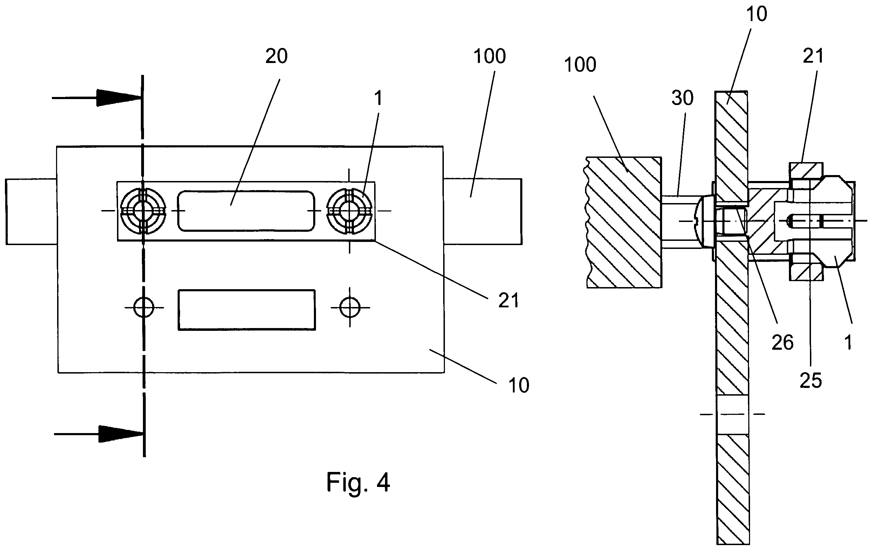

Fig. 4 zeigt eine Situation, bei dem der Einsteckvorgang des Gegensteckers 30 bereits begonnen hat (Steckrichtung 29). Man erkennt, dass die Bohrung 25 im Steckerflansch 21 bereits auf dem ersten konischen Bereich 4 des Federelements 1 aufgleitet, wodurch das geschlitzte Ende des Federelements gegen die Wirkung der Federkraft in radialer Richtung gestaucht wird. Dadurch wird die für den Steckvorgang erforderliche Gegenkraft zur Steckkraft erzeugt.

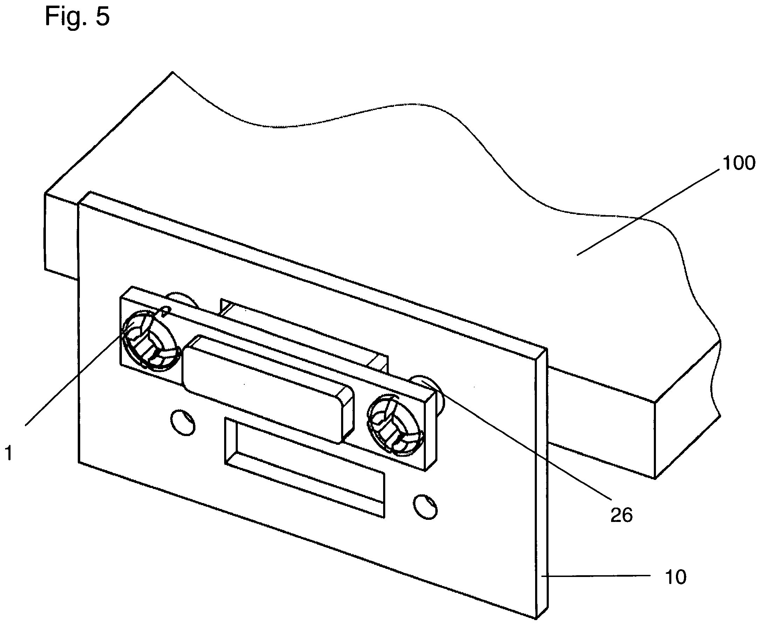

Am Ende des konischen Bereichs 4 erreicht der Steckerflansch 21 den dritten zylindrischen Bereich 5 eines Federelements 1. Der Kupplungsvorgang von Stecker 20 und Gegenstecker 30 ist damit abgeschlossen und die Kraft in Axialrichtung ist vollständig aufgehoben. Der Steckerflansch 21 gleitet noch weiter, bis sich die in den Fig. 5 und 6 dargestellte Situation ergibt, in der der Steckerflansch 21 vollständig auf dem dritten zylindrischen Bereich 5 des Federelements 1 sitzt. Dies ist die Endposition, deren Überschreiten durch einen Anschlag (nicht dargestellt) an der Gehäusewand 10 ausgeschlossen wird.

## Patentansprüche

1. Lagerung eines Steckers (20) an einem Gehäuse (10), welcher zur Kupplung mit einem Gegenstecker (30) ausgebildet ist, umfassend ein in seiner Radialrichtung federnd wirkendes, an dem Gehäuse (10) befestigtes und in eine steckerseitige Bohrung (25) gestecktes Federelement (1), wobei das Federelement (1) in Axialrichtung einen konischen Bereich (4) aufweist, der - in Steckrichtung (29) des Gegensteckers (30) gesehen - ansteigend ausgebildet ist, und an den sich ein zylinderförmiger Bereich (5) anschließt, wobei der Durchmesser des zylinderförmigen Bereichs (5) des Federelements (1) in dessen Gleichgewichtslage ohne äußere Kräfte größer ist als der Durchmesser der steckerseitigen Bohrung (25) und **dadurch gekennzeichnet dass** der Stecker (20) in einer Raumrichtung, die durch die Steckrichtung des Gegensteckers definiert ist, durch einen benachbarten zylindrischen Abschnitt (3) des Federelementes (1) beweglich ist, wobei der Stecker (20) bis zum Erreichen des konischen Abschnitts (4) des Federelementes (1) auf dem zylindrischen Abschnitt (3) frei gleiten kann.

2. Lagerung nach Anspruch 1, **dadurch gekennzeichnet, dass** das Federelement (1) in zwei Raumrichtungen, die rechtwinklig zueinander und gleichzeitig rechtwinklig zur Steckrichtung sind, schwimmend in einer Bohrung (26) des Gehäuses (10) befestigt ist.

3. Lagerung nach Anspruch 1 oder 2, **dadurch gekennzeichnet, dass** das Federelement (1) an seinem gehäusefernen Ende einen weiteren konischen Bereich (6) aufweist, der in Richtung auf das gehäuseferne Ende abfällt.

## Claims

1. Bearing of a plug (20) on a housing (10), which plug is designed for coupling to a mating plug (30), comprising a spring element (1) which acts with a spring action in its radial direction, is fastened to the housing (10) and is inserted into a plug-side bore (25), wherein the spring element (1) has a conical region (4) in the axial direction, the said conical region - as seen in the insertion direction (29) of the mating plug (30) - being of rising design, and a cylindrical region (5) adjoins the said conical region, wherein the diameter of the cylindrical region (5) of the spring element (1) in its equilibrium position without external forces is greater than the diameter of the plug-side bore (25), and **characterized in that** the plug (20) can be moved in a spatial direction, which is defined by the insertion direction of the mating plug, by an adjacent cylindrical section (3) of the spring element (1), wherein the plug (20) can slide freely on the cylindrical section (3) until it reaches the conical section (4) of the spring element (1).

2. Bearing according to Claim 1, **characterized in that** the spring element (1) is fastened in a floating manner in a bore (26) of the housing (10) in two spatial directions which are at a right angle to one another and at the same time at a right angle to the insertion direction.

3. Bearing according to Claim 1 or 2, **characterized in that** the spring element (1) has a further conical region (6) at its end which is remote from the housing, the said further conical region falling away in the direction of the end which is remote from the housing.

## Revendications

1. Support d'un connecteur (20) sur un boîtier (10) qui est réalisé pour l'accouplement à un connecteur conjugué (30), comprenant un élément de ressort (1) agissant avec l'effet de ressort dans sa direction radiale, fixé sur le boîtier (10) et enfiché dans un alésage (25) du côté du connecteur, l'élément de ressort (1) présentant dans la direction axiale une région conique (4) qui est réalisée avec une inclinaison montante, vu dans la direction d'enfichage (29) du connecteur conjugué (30), et à laquelle se raccorde une région de forme cylindrique (5), le diamètre de la région de forme cylindrique (5) de l'élément de ressort (1) étant supérieur, dans sa position d'équilibre sans force extérieure, au diamètre de l'alésage (25) du côté du connecteur et **caractérisé en ce que** le connecteur (20) peut être déplacé, dans une direction spatiale qui est définie par la direction d'enfichage du connecteur conjugué, par une portion cylindrique adjacente (3) de l'élément de ressort (1), le connecteur (20) pouvant glisser librement sur la portion cylindrique (3) jusqu'à atteindre la portion conique (4) de l'élément de ressort (1).

2. Support selon la revendication 1, **caractérisé en ce que** l'élément de ressort (1) est fixé de manière flottante dans un alésage (26) du boîtier (10) dans deux directions spatiales qui sont à angle droit l'une par rapport à l'autre et en même temps à angle droit par rapport à la direction d'enfichage.

3. Support selon la revendication 1 ou 2, **caractérisé en ce que** l'élément de ressort (1) présente, au niveau de son extrémité opposée au boîtier, une région conique supplémentaire (6) qui descend dans la direction de l'extrémité éloignée du boîtier.
